(19) Europäisches Patentamt / European Patent Office / Office européen des brevets

(11) **EP 4 572 380 A1**

(12) **EUROPEAN PATENT APPLICATION**
published in accordance with Art. 153(4) EPC

(43) Date of publication:
**18.06.2025 Bulletin 2025/25**

(21) Application number: **23862462.1**

(22) Date of filing: **07.09.2023**

(51) International Patent Classification (IPC):
**H04W 24/08** (2009.01)

(52) Cooperative Patent Classification (CPC):
**H04W 24/06; H04W 24/08**

(86) International application number:
**PCT/CN2023/117416**

(87) International publication number:
**WO 2024/051768 (14.03.2024 Gazette 2024/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.09.2022 CN 202211105077**

(71) Applicants:
• **CHINA MOBILE COMMUNICATION CO., LTD RESEARCH INSTITUTE**
**Beijing 100053 (CN)**
• **CHINA MOBILE COMMUNICATIONS GROUP CO., LTD.**
**Beijing 100032 (CN)**

(72) Inventors:
• **SONG, Dan**
**Beijing 100032 (CN)**
• **SONG, Xiaoxiong**
**Beijing 100032 (CN)**
• **LU, Songhe**
**Beijing 100032 (CN)**
• **LI, Nan**
**Beijing 100032 (CN)**
• **XU, Xiaodong**
**Beijing 100032 (CN)**
• **HU, Nan**
**Beijing 100032 (CN)**
• **FENG, Chunjie**
**Beijing 100032 (CN)**

(74) Representative: **Murgitroyd & Company**
**165-169 Scotland Street**
**Glasgow G5 8PL (GB)**

(54) **DATA PROCESSING METHOD AND APPARATUS, AND DEVICE AND STORAGE MEDIUM**

(57) A data processing method, apparatus, device, and storage medium are provided. The method includes: determining a probability proportion of multiple terminals in an operational network at different output powers; and determining the power consumption of each terminal among the multiple terminals at the different output powers; calculating a total power consumption of each terminal based on the probability proportion and the power consumption.

FIG.2

**Description**

**CROSS REFERENCE OF RELATED APPLICATION**

The present disclosure claims a priority of Chinese patent disclosure No. 202211105077.6 filed on September 9, 2022, which are incorporated herein by reference in its entirety.

**TECHNICAL FIELD**

The present disclosure relates to the field of wireless communication technologies, and in particular, to a data processing method, an apparatus, a device, and a storage medium.

**BACKGROUND**

Currently, the schemes for estimating terminal power consumption are relatively singular, typically relying on typical terminal service models as terminal power consumption models to estimate terminal power consumption. However, the actual power consumption of a terminal is not only related to the service model used by the terminal. In other words, for the same terminal, even if the same service model is used, the actual power consumption of the terminal may differ under certain circumstances. It can be seen that the scheme of solely using the service model as the power consumption evaluation model has limitations and cannot accurately estimate the actual power consumption of the terminal.

**SUMMARY**

In view of this, the embodiments of the present disclosure is to provide a data processing method, an apparatus, a device, and a storage medium.
The technical solutions of the embodiments of the present disclosure are implemented as follows:
At least one embodiment of the present disclosure provides a data processing method, where the method includes:

determining a probability proportion of multiple terminals in an operational network at different output powers; and determining the power consumption of each terminal among the multiple terminals at the different output powers; calculating a total power consumption of each terminal based on the probability proportion and the power consumption.

Furthermore, according to at least one embodiment of the present disclosure, the determining the power consumption of each terminal among the multiple terminals at the different output powers includes:
for each terminal, determining the power consumption of the terminal at the different output powers based on the different output powers and the efficiency of the terminal in the operational network.
Furthermore, according to at least one embodiment of the present disclosure, the calculating the total power consumption of each terminal based on the probability proportion and the power consumption includes:

for each terminal, multiplying the power consumption of the terminal at the different output powers by the corresponding probability proportion to obtain multiple first values;
summing the multiple first values to obtain a second value; and
using the second value as the total power consumption of the terminal.

Furthermore, according to at least one embodiment of the present disclosure, the determining the power consumption of each terminal among the multiple terminals at the different output powers includes:
for each terminal, determining the power consumption of the terminal at the different output powers when the terminal is in a screen-off state and executing a specific continuous uplink service.
Furthermore, according to at least one embodiment of the present disclosure, the calculating the total power consumption of each terminal based on the probability proportion and the power consumption includes:

storing the determined probability proportion and power consumption;
calculating the total power consumption of each terminal based on the probability proportion and power consumption stored locally.

Furthermore, according to at least one embodiment of the present disclosure, the method further includes:

determining a probability proportion of power amplifiers in the multiple terminals in the operational network at different output powers; and determining the power consumption of the power amplifier in each terminal at the different output powers;

calculating a total power consumption of the power amplifier in each terminal based on the probability proportion and the power consumption.

At least one embodiment of the present disclosure provides a data processing apparatus, including:

a first processing unit, configured to determine a probability proportion of multiple terminals in an operational network at different output powers;

a second processing unit, configured to determine the power consumption of each terminal among the multiple terminals at the different output powers;

a third processing unit, configured to calculate a total power consumption of each terminal based on the probability proportion and the power consumption.

At least one embodiment of the present disclosure provides a data processing apparatus, including:

a communication interface;

a processor, configured to: determine a probability proportion of multiple terminals in an operational network at different output powers; determine the power consumption of each terminal among the multiple terminals at the different output powers; and calculate a total power consumption of each terminal based on the probability proportion and the power consumption.

At least one embodiment of the present disclosure provides a network device, including a processor and a memory for storing a computer program executable on the processor,
where the processor is configured to run the computer program to perform the method hereinabove.

At least one embodiment of the present disclosure provides a computer-readable storage medium, having stored therein a computer program, where the computer program, when executed by a processor, implements the method hereinabove.

The data processing method, the apparatus, the device, and the storage medium provided by the embodiments of the present disclosure determine the probability proportion of multiple terminals in an operational network at different output powers; determine the power consumption of each terminal among the multiple terminals at the different output powers; and calculate the total power consumption of each terminal based on the probability proportion and the power consumption. The technical solutions provided by the embodiments of the present disclosure combine the actual output power and power consumption of terminals in the operational network to estimate the total power consumption of the terminals, thereby improving the accuracy of terminal power consumption estimation compared to the related art that uses terminal service models to estimate terminal power consumption.

## BRIEF DESCRIPTION OF THE DRAWINGS

FIG. 1 is a schematic diagram of a service model for estimating terminal power consumption in the related art;
FIG. 2 is a schematic diagram of the implementation process of the data processing method according to an embodiment of the present disclosure;
FIG. 3 is a first schematic diagram of the specific implementation process of the data processing method according to an embodiment of the present disclosure;
FIG. 4 is a second schematic diagram of the specific implementation process of the data processing method according to an embodiment of the present disclosure;
FIG. 5 is a schematic diagram of the structure of the data processing apparatus according to an embodiment of the present disclosure; and
FIG. 6 is a schematic diagram of the structure of the network device according to an embodiment of the present disclosure.

## DETAILED DESCRIPTION

Before introducing the technical solutions of the embodiments of the present disclosure, the related art is first explained.

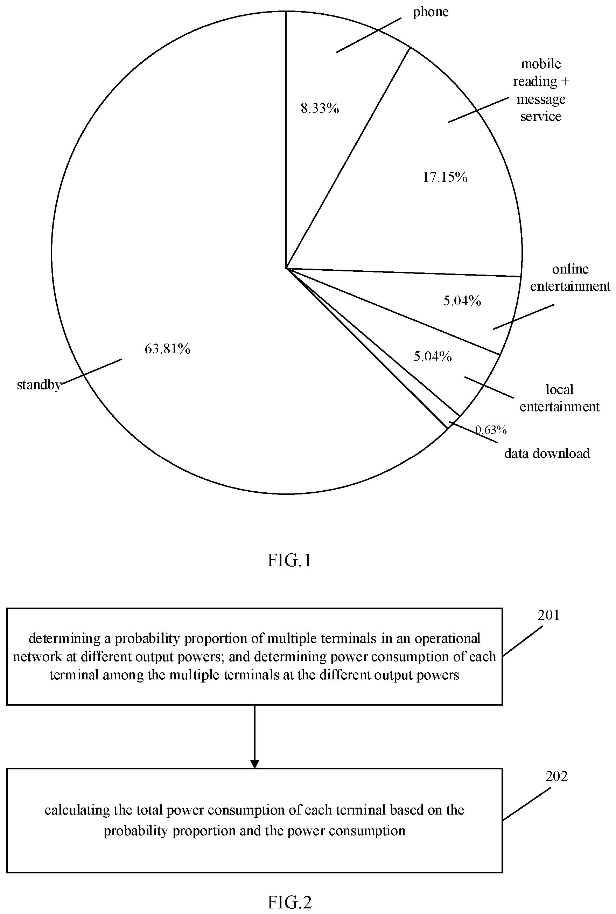

In the related art, FIG. 1 is a schematic diagram of a service model for estimating terminal power consumption in the related art. As shown in FIG. 1, the current schemes for estimating terminal power consumption are relatively singular, typically relying on typical terminal service models as terminal power consumption models to estimate terminal power consumption.

However, the actual power consumption of a terminal is not only related to the service model used by the terminal but also strongly correlated with the actual network state in which the terminal is located. In other words, a terminal in a good network coverage area, for example, RSRP > -90 dBm, usually has a lower output power and lower power consumption; while a terminal in a poor network coverage area, for example, RSRP < -110 dBm, usually has a higher output power, resulting in higher power consumption, where RSRP refers to Reference Signal Received Power.

In other words, for the same terminal, even if the same service model is used, if the terminal is in different network coverage states, the actual power consumption of the user's terminal will also be different. It can be seen that the scheme of solely using the service model as the power consumption evaluation model has limitations and cannot accurately estimate the actual power consumption of the terminal.

Secondly, the service models in the related art are suitable for evaluating the power consumption of the application processing system part of terminal products (Application Processor (AP) + Graphics Processing Unit (GPU), etc.). The related art also lacks methods for effectively evaluating the power consumption of the communication system part of terminal products in the operational network (BaseBand IC (BBIC) + Radio Frequency IC (RFIC) + Radio Frequency Front-end Modules (RF FEM), etc.).

In addition, when the terminal is in the screen-off state, the Power Amplifier (PA) is a major power consumer in the terminal's power consumption composition. For example, when the terminal is transmitting at full power, in the screen-off state, the PA power consumption can account for more than 80% of the terminal's total power consumption. The power amplifier will increase or decrease the output power according to the current network coverage situation of the terminal or the output power indication requirements from the network side, thereby affecting the terminal's power consumption. For the major power consumer in the terminal, the power amplifier, the current power consumption evaluation methods only evaluate the average current of the PA and do not consider the characteristics of the operational network, making it impossible to evaluate the power consumption performance of the power amplifier in the actual operational network. In other words, the related art does not have technologies or methods for evaluating the power consumption performance of the terminal's power amplifier in the operational network, and terminal manufacturers lack power consumption-related selection references when choosing power amplifiers based on the characteristics of the operational network.

Based on this, in the embodiments of the present disclosure, the probability proportion of multiple terminals in the operational network at different output powers is determined; the power consumption of each terminal among the multiple terminals at the different output powers is determined; and the total power consumption of each terminal is calculated based on the probability proportion and the power consumption.

FIG. 2 is a schematic diagram of the implementation process of the data processing method according to an embodiment of the present disclosure. As shown in FIG. 2, the method includes steps 201 to 202:

Step 201: determining a probability proportion of multiple terminals in an operational network at different output powers; and determining power consumption of each terminal among the multiple terminals at the different output powers.

It can be understood that the operational network may include:

the operational network within a target location;
or,
the operational network within a target city;
or,
the operational network within a target country;
or,
the operational network within a target continent.

In other words, the scope of the "operational network" can be large or small. For example, it can be the operational network within a factory, or the operational network within a city, or the operational network within a country, or the operational network within the whole Asia.

As an implementation, the determining the probability proportion of multiple terminals in the operational network at different output powers may include:

the network management platform collects network management data from the base station side, processes the network management data collected from the base station side, and obtains the probability proportion of multiple terminals in the operational network at different output powers.

Here, the network management platform determining the probability proportion of multiple terminals in the operational network at different output powers may specifically include:

Step 1: The network management platform collects network management data from the base station side.

Here, the network management data may refer to the Power Headroom Report (PHR).

Here, when multiple terminals access the network, the base station configures each terminal to periodically report the PHR. When each terminal is in the connected state and performing uplink services, each terminal periodically reports the PHR; where the PHR carries PH and Pcmax information. PH represents the cell power headroom, and Pcmax represents the maximum output power.

Step 2: The network management platform parses the PHR reported by each terminal to the base station to obtain the PH and Pcmax information.

Step 3: When the PH is greater than or equal to 0, calculate the actual output power of each terminal in the operational network according to the following formula (1). When the PH is less than 0, calculate the actual output power of each terminal in the operational network according to the following formula (2).

$$P_{\mathrm{cmax}} \text{-} PH = P_{\mathrm{out}} \quad (1)$$

$$PH \text{-} P_{\mathrm{cmax}} = P_{\mathrm{out}} \quad (2)$$

where $P_{\mathrm{out}}$ represents the actual output power of the terminal.

Step 4: The network management platform counts the total number of multiple terminals and counts the number of terminals at each output power point. Based on the counted total number of multiple terminals and the number of terminals at each output power point, calculate the probability proportion of multiple terminals at different output powers.

Assuming that the output powers calculated according to the above formulas (1) and (2) include 10 dBm, 20 dBm, and 30 dBm, the total number of multiple terminals counted is 100, the number of terminals with an output power of 10 dBm is 10, the number of terminals with an output power of 20 dBm is 20, and the number of terminals with an output power of 30 dBm is 30, then the probability proportions are: 10/100 = 10%, 20/100 = 20%, 30/100 = 30%.

It should be noted that the network management platform can count the network management data, i.e., PHR, reported by all base stations under its jurisdiction within a T period. According to the above steps 1 to 4, the real-time output power and probability proportion of each terminal initiating uplink services within the T period can be obtained, i.e., the percentage of the number of terminals with a certain dBm output power to the total number of terminals. Then, a data graph of the output power points and probability proportions of each terminal can be drawn.

Taking T = 24 hours as an example, by fitting the trend graph obtained within 24 hours, the current daily power distribution trend graph can be obtained (the main power aggregation points can be found), and a statistical model with the output power as the horizontal coordinate and the daily distribution as the vertical coordinate can be obtained. Similarly, the current statistical model of the base station coverage area under the jurisdiction of the network management platform for each month and year can be obtained, and the main power aggregation points at each stage can be further found.

As another implementation, the determining the probability proportion of multiple terminals in the operational network at different output powers may include:
the network management platform obtains the probability proportion of multiple terminals in the operational network at different output powers from the base station side.

Here, the network management platform determining the probability proportion of multiple terminals in the operational network at different output powers may specifically include:
Step 1: The base station obtains the network management data reported by multiple terminals.

Here, the network management data may refer to the PHR.

Here, when multiple terminals access the network, the base station configures each terminal to periodically report the PHR. When each terminal is in the connected state and performing uplink services, each terminal periodically reports the PHR; where the PHR carries PH and Pcmax information.

Step 2: The base station parses the PHR reported by each terminal to obtain the PH and Pcmax information.

Step 3: When the PH is greater than or equal to 0, calculate the actual output power of each terminal in the operational network according to the above formula (1). When the PH is less than 0, calculate the actual output power of each terminal in the operational network according to the above formula (2).

Step 4: The base station counts the total number of multiple terminals and counts the number of terminals at each output power point. Based on the counted total number of multiple terminals and the number of terminals at each output power point, calculate the probability proportion of multiple terminals at different output powers.

Assuming that the output powers calculated according to the above formulas (1) and (2) include 10 dBm, 20 dBm, and 30 dBm, the total number of multiple terminals counted is 100, the number of terminals with an output power of 10 dBm is 10, the number of terminals with an output power of 20 dBm is 20, and the number of terminals with an output power of 30 dBm is 30, then the probability proportions are: 10/100 = 10%, 20/100 = 20%, 30/100 = 30%.

Step 5: The base station reports the calculated probability proportion of multiple terminals at different output powers to the network management platform.

As yet another implementation, the determining the probability proportion of multiple terminals in the operational network at different output powers may include:

Here, the network management platform determining the probability proportion of multiple terminals in the operational network at different output powers may specifically include:

Step 1: The network management platform collects network management data from the base station side.

Here, the network management data may refer to the PHR.

Here, when multiple terminals access the network, the base station configures each terminal to periodically report the PHR. When each terminal is in the connected state and performing uplink services, each terminal periodically reports the PHR; where the PHR carries PH and Pcmax information.

Step 2: The network management platform parses the PHR reported by each terminal to obtain the PH and Pcmax information.

Step 3: The network management personnel import the parsed PH and Pcmax information into an Excel table installed on the network management platform.

Step 4: In the Excel table, when the PH is greater than or equal to 0, calculate the actual output power of each terminal in the operational network according to the above formula (1); when the PH is less than 0, calculate the actual output power of each terminal in the operational network according to the above formula (2).

Step 5: The network management platform counts the total number of multiple terminals and counts the number of terminals at each output power point. Based on the counted total number of multiple terminals and the number of terminals at each output power point, the probability proportion of multiple terminals at different output powers is calculated.

Assuming that the output powers calculated according to the above formulas (1) and (2) include 10 dBm, 20 dBm, and 30 dBm, the total number of multiple terminals counted is 100, the number of terminals with an output power of 10 dBm is 10, the number of terminals with an output power of 20 dBm is 20, and the number of terminals with an output power of 30 dBm is 30, then the probability proportions are: 10/100 = 10%, 20/100 = 20%, 30/100 = 30%.

In one embodiment, the determining the power consumption of each terminal among the multiple terminals at the different output powers includes:

for each terminal, determining the power consumption of the terminal at the different output powers based on the different output powers and the efficiency of the terminal in the operational network.

It should be noted that determining the power consumption of each terminal at different output powers requires the use of specialized power consumption testing tools.

In other words, after determining the different output powers of each terminal in the operational network, specialized power consumption testing tools are used to test the efficiency of the terminal at different output powers.

In other words, terminal manufacturers can use specialized power consumption testing tools to test the efficiency of the terminal at different output powers and provide the results to the network management platform; or, laboratory personnel can use specialized power consumption testing tools to test the efficiency of the terminal at different output powers and store the test results on the network management platform.

Here, the power consumption of each terminal at different output powers can be calculated according to the following formula (3):

$$P_{0\_n} = P_{out\_n} \div E_n \ \ (3)$$

where $P_{0\_n}$ represents the power consumption of the terminal at different output powers, $P_{out\_n}$ represents the actual output power of the terminal, and $E_n$ represents the efficiency of the terminal at different output powers.

In one embodiment, the determining the power consumption of each terminal among the multiple terminals at the different output powers includes:

for each terminal, determining the power consumption of the terminal at the different output powers when the terminal is in a screen-off state and executing a specific continuous uplink service.

Step 202: calculating the total power consumption of each terminal based on the probability proportion and the power consumption.

In one embodiment, the calculating the total power consumption of each terminal based on the probability proportion and the power consumption includes:

storing the determined probability proportion and power consumption locally;

calculating the total power consumption of each terminal based on the probability proportion and power consumption stored locally.

In other words, the determined probability proportion and power consumption can be stored locally first, and then the stored probability proportion and power consumption can be used to calculate the total power consumption of each terminal.

In one embodiment, the calculating the total power consumption of each terminal based on the probability proportion and the power consumption includes:

for each terminal, multiplying the power consumption of the terminal at different output powers by the corresponding probability proportion to obtain multiple first values;

summing the multiple first values to obtain a second value;

using the second value as the total power consumption of the terminal.

Here, the product of the power consumption of the terminal at different output powers and the corresponding probability proportion can be calculated according to the following formula (4):

$$P_{prob\_n} = P_{0\_n} \times P_n \ (4)$$

where $P_{prob\_n}$ represents the product of the power consumption of the terminal at different output powers and the corresponding probability proportion, $P_{0\_n}$ represents the power consumption of the terminal at different output powers $P_{out\_n}$, and $P_n$ represents the probability proportion of the terminal at different output powers $P_{out\_n}$. n ranges from 1 to N, where N is an integer greater than 1.

Here, the total power consumption of each terminal, i.e., the second value, can be calculated according to the following formula (5):

$$P_{sum} = P_{prob\_1} + P_{prob\_2} + \ldots\ldots + P_{prob\_n} \ (5)$$

where $P_{sum}$ represents the total power consumption of the terminal, $P_{prob\_1}$ represents the first value of the terminal at output power $P_{out\_1}$, $P_{prob\_2}$ represents the first value of the terminal at output power $P_{out\_2}$, and so on, $P_{prob\_n}$ represents the first value of the terminal at output power $P_{out\_n}$.

In one embodiment, the method further includes:

determining the probability proportion of power amplifiers in the multiple terminals in the operational network at different output powers; and determining the power consumption of the power amplifier in each terminal at the different output powers;

calculating the total power consumption of the power amplifier in each terminal based on the probability proportion and the power consumption.

It can be understood that determining the probability proportion of power amplifiers in the multiple terminals in the operational network at different output powers is similar to determining the probability proportion of multiple terminals in the operational network at different output powers, and will not be repeated here. Determining the power consumption of the power amplifier in each terminal at different output powers is similar to determining the power consumption of each terminal at different output powers, and will not be repeated here.

It can be understood that determining the probability proportion of power amplifiers in the multiple terminals in the operational network at different output powers; and determining the power consumption of the power amplifier in each terminal at the different output powers when the terminal is in a screen-off state and executing a specific continuous uplink service, so that the total power consumption of the power amplifier in each terminal can be calculated based on the determined probability proportion and power consumption.

It should be noted that the data processing method provided by the embodiments of the present disclosure can also be used to evaluate the total power consumption of the power amplifier in the terminal in the operational network. The method for determining the total power consumption of the power amplifier in the terminal is similar to the method for determining the total power consumption of the terminal, and will not be repeated here.

The embodiments of the present disclosure have the following advantages:

(1) Determining the probability proportion of multiple terminals in the operational network at different output powers; determining the power consumption of each terminal among the multiple terminals at the different output powers; and calculating the total power consumption of each terminal based on the probability proportion and the power consumption, compared to the related art that uses terminal service models to estimate terminal power consumption, can combine the actual output power and power consumption of terminals in the operational network, thereby improving the accuracy of terminal power consumption estimation, making up for the defects and deficiencies in the terminal power consumption estimation system in the related art, and further improving the terminal power consumption estimation system.

(2) Combining the actual output power and power consumption of the terminal in the screen-off state can significantly improve the accuracy of terminal power consumption estimation in the screen-off state.

(3) It is suitable for evaluating the total power consumption of the terminal and also for evaluating the total power consumption of the power amplifier in the terminal.

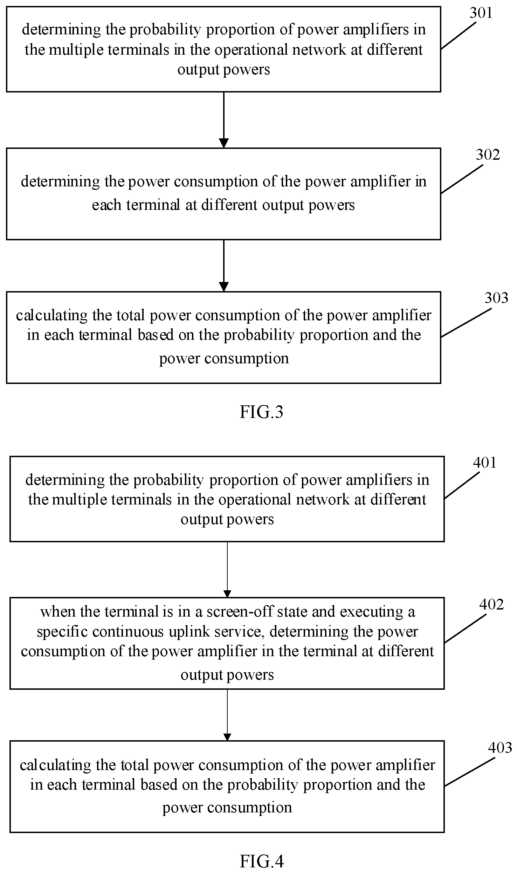

FIG. 3 is a schematic diagram of the specific implementation process of the data processing method according to an embodiment of the present disclosure. As shown in FIG. 3, the method includes steps 301 to 303:

Step 301: determining the probability proportion of power amplifiers in the multiple terminals in the operational network at different output powers.

Here, the probability proportion can also be used to obtain the proportion model of the output power of the power amplifier in the terminal in the operational network; this proportion model represents the correspondence between the output power of the power amplifier in the terminal and the probability proportion.

Step 302: determining the power consumption of the power amplifier in each terminal at different output powers.

Here, the power consumption may refer to consumption of power.

Here, specialized power consumption testing tools can be used to test the efficiency of the power amplifier in the terminal at different output powers.

Here, the power consumption of the power amplifier in the terminal at different output powers can be calculated according to the following formula (6):

$$PPA_{\_n} = PPA_{out\_n} \div PAE_n \quad (6)$$

where $PPA_{\_n}$ represents the power consumption of the power amplifier in the terminal at different output powers, $PPA_{out\_n}$ represents the different output powers of the power amplifier in the terminal, and $PAE_n$ represents the efficiency of the power amplifier in the terminal at different output powers.

Here, multiplying $PPA_{\_n}$ by a period of time can obtain the energy consumption of the power amplifier in the terminal during that period of time.

Here, the power consumption of the power amplifier in the terminal at different output powers can also be calculated according to the following formula (7):

$$PPA_{\_n} = VccPA_{\_n} \times IccPA_{\_n} \quad (7)$$

where $PPA_{\_n}$ represents the power consumption of the power amplifier in the terminal at different output powers, $VccPA_{\_n}$ represents the working voltage of the power amplifier in the terminal obtained through testing, and $IccPA_{\_n}$ represents the working current of the power amplifier in the terminal obtained through testing.

Step 303: calculating the total power consumption of the power amplifier in each terminal based on the probability proportion and the power consumption.

Here, the product of the power consumption of the power amplifier in each terminal at different output powers and the corresponding probability proportion can be calculated according to the following formula (8):

$$PPA_{prob\_n} = PPA_{\_n} \times P_n \quad (8)$$

where $PPA_{prob\_n}$ represents the product of the power consumption of the power amplifier in each terminal at different output powers $PPA_{out\_n}$ and the corresponding probability proportion, $PPA_{\_n}$ represents the power consumption of the power amplifier in the terminal at different output powers $PPA_{out\_n}$, and $P_n$ represents the probability proportion of the power amplifier in the multiple terminals in the operational network at different output powers $PPA_{out\_n}$. n ranges from 1 to N, where N is an integer greater than 1.

Here, the total power consumption of the power amplifier in each terminal can be calculated according to the following formula (9):

$$PPA_{sum} = PPA_{prob\_1} + PPA_{prob\_2} + \ldots\ldots + PPA_{prob\_n} \quad (9)$$

where $PPA_{sum}$ represents the total power consumption of the power amplifier in each terminal.

Table 1 is a schematic diagram of the product of the probability proportion and the corresponding power consumption of the power amplifier (PA) in the terminal at different output powers. As shown in Table 1, taking the output power of the PA in the terminal as P1 as an example, the probability proportion of the PA in the terminal at output power P1 is B1%, and the power consumption of the PA in the terminal at output power P1 is P1/A1, so the product of the power consumption and the corresponding probability proportion of the PA in the terminal at output power PA1 is B1 × P1/A1.

Table 1

| Output Power | Efficiency | Probability proportion at different output power in the operational network | Power Consumption at Different Output Power | Product of power consumption of power amplifier (PA) in the terminal at different output power and corresponding probability proportion |
|---|---|---|---|---|
| mW | % | % | mW | mW |
| P1 | A1% | B1% | 100×P1/A1 | B1×P1/A1 |
| P2 | A2% | B2% | 100×P2/A2 | B2×P2/A2 |
| P3 | A3% | B3% | 100×P3/A3 | B3×P3/A3 |
| P4 | A4% | B4% | 100×P4/A4 | B4×P4/A4 |
| P5 | A5% | B5% | 100×P5/A5 | B5×P5/A5 |
| P6 | A6% | B6% | 100×P6/A6 | B6×P6/A6 |
| P7 | A7% | B7% | 100×P7/A7 | B7×P7/A7 |
| P8 | A8% | B8% | 100×P8/A8 | B8×P8/A8 |
| P9 | A9% | B9% | 100×P9/A9 | B9×P9/A9 |

| | | | | |
|---|---|---|---|---|
| P10 | A10% | B10% | 100×P10/A10 | B10×P10/A10 |
| P11 | A11% | B11% | 100×P11/A11 | B11×P11/A11 |
| P12 | A12% | B12% | 100×P12/A12 | B12×P12/A12 |
| P13 | A13% | B13% | 100×P13/A13 | B13×P13/A13 |
| P14 | A14% | B14% | 100×P14/A14 | B14×P14/A14 |
| P15 | A15% | B15% | 100×P15/A15 | B15×P15/A15 |
| P16 | A16% | B16% | 100×P16/A16 | B16×P16/A16 |
| P17 | A17% | B17% | 100×P17/A17 | B17×P17/A17 |
| P18 | A18% | B18% | 100×P18/A18 | B18×P18/A18 |
| P19 | A19% | B19% | 100×P19/A19 | B19×P19/A19 |
| P20 | A20% | B20% | 100×P20/A20 | B20×P20/A20 |
| P21 | A21% | B21% | 100×P21/A21 | B21×P21/A21 |
| P22 | A22% | B22% | 100×P22/A22 | B22×P22/A22 |
| P23 | A23% | B23% | 100×P23/A23 | B23×P23/A23 |
| P24 | A24% | B24% | 100×P24/A24 | B24×P24/A24 |
| P25 | A25% | B25% | 100×P25/A25 | B25×P25/A25 |
| ... | ... | ... | ... | ... |

Table 2 is a schematic diagram of the total power consumption of the power amplifier (PA) in the terminal. As shown in Table 2, the probability proportion of the PA in the terminal at different output powers is determined, and the power consumption of the PA in the terminal at different output powers is determined. Based on the determined probability proportion and power consumption, the final total power consumption PPAsum of the PA can be obtained.

Table 2

| Output Powers | | Efficiency | Probability proportion at different output power in the operational network | Power Consumption at Different Output Power | Product of probability proportion of PA in the terminal at different output power and corresponding power consumption |
|---|---|---|---|---|---|
| dBm | mW | % | % | mW | mW |
| 5 | 3.16 | 0.70% | 1.000% | 451.75 | 4.52 |
| 6 | 3.98 | 0.80% | 1.000% | 497.63 | 4.98 |
| 7 | 5.01 | 1.00% | 2.000% | 501.19 | 10.02 |
| 8 | 6.31 | 2.00% | 4.000% | 315.48 | 12.62 |
| 9 | 7.94 | 3.00% | 10.000% | 264.78 | 26.48 |
| 10 | 10.00 | 4.00% | 10.000% | 250.00 | 25.00 |
| 11 | 12.59 | 5.00% | 1.000% | 251.79 | 2.52 |
| 12 | 15.85 | 6.00% | 1.000% | 264.15 | 2.64 |
| 13 | 19.95 | 8.00% | 2.000% | 249.41 | 4.99 |
| 14 | 25.12 | 9.00% | 1.000% | 279.10 | 2.79 |
| 15 | 31.62 | 10.00% | 10.000% | 316.23 | 31.62 |
| 16 | 39.81 | 6.00% | 20.000% | 663.51 | 132.70 |
| 17 | 50.12 | 8.00% | 5.000% | 626.48 | 31.32 |
| 18 | 63.10 | 9.00% | 5.000% | 701.06 | 35.05 |
| 19 | 79.43 | 10.00% | 1.000% | 794.33 | 7.94 |
| 20 | 100.00 | 12.00% | 2.000% | 833.33 | 16.67 |
| 21 | 125.89 | 15.00% | 8.000% | 839.28 | 67.14 |
| 22 | 158.49 | 18.00% | 8.000% | 880.50 | 70.44 |
| 23 | 199.53 | 20.00% | 4.000% | 997.63 | 39.91 |
| 24 | 251.19 | 24.00% | 2.000% | 1046.62 | 20.93 |

| 25 | 316.23 | 28.00% | 1.000% | 1129.38 | 11.29 |
|---|---|---|---|---|---|
| 26 | 398.11 | 30.00% | 1.000% | 1327.02 | 13.27 |
| | | | 100.0 0% | PPAsum | 574.85 |

In this example, the following advantages are achieved:

(1) It is suitable for evaluating the total power consumption of the power amplifier in the terminal, significantly optimizing the power consumption estimation system of the power amplifier in the terminal, improving the accuracy of power consumption estimation of the power amplifier in the terminal, and helping to optimize the power consumption performance of the power amplifier in the terminal, providing a reference for terminal manufacturers to select power amplifiers based on power consumption performance.

FIG. 4 is a schematic diagram of the specific implementation process of the data processing method according to another embodiment of the present disclosure. As shown in FIG. 4, the method includes steps 401 to 403:
Step 401: determining the probability proportion of power amplifiers in the multiple terminals in the operational network at different output powers.
Here, the probability proportion can also be used to obtain the proportion model of the output power of the terminal in the operational network; this proportion model represents the correspondence between the output power of the terminal and the probability proportion.
Step 402: when the terminal is in a screen-off state and executing a specific continuous uplink service, determining the power consumption of the power amplifier in the terminal at different output powers.
Here, the power consumption may refer to power consumption.
Here, when the terminal is in a screen-off state and executing a specific continuous uplink service, the power consumption of the power amplifier in the terminal at different output powers can be calculated according to the following formula (10):

$$PUE_{\_n} = PUE_{out\_n} \div E_n \quad (10)$$

where $PUE_{\_n}$ represents the power consumption of the power amplifier in the terminal at different output powers when the terminal is in a screen-off state and executing a specific continuous uplink service, $PUE_{out\_n}$ represents the different output powers of the power amplifier in the terminal when the terminal is in a screen-off state and executing a specific continuous uplink service, and $E_n$ represents the efficiency of the power amplifier in the terminal at different output powers when the terminal is in a screen-off state and executing a specific continuous uplink service.
Step 403: calculating the total power consumption of the power amplifier in each terminal based on the probability proportion and the power consumption.
Here, the power consumption of the power amplifier in the terminal at different output powers can be obtained by combining the probability proportion of the power amplifier in the multiple terminals in the operational network at different output powers and the efficiency of the power amplifier in the terminal at different output powers. Then, the power consumption of the power amplifier in the terminal at different output powers can be summed to obtain the total power consumption of the power amplifier in the terminal.
Table 3 is a schematic diagram of the total power consumption of the power amplifier (PA) in the terminal. As shown in Table 3, the probability proportion of the PA in the terminal at different output powers is determined; when the terminal is in a screen-off state and executing a specific continuous uplink service, the power consumption of the PA in the terminal at different output powers is determined. Based on the determined probability proportion and power consumption, the final total power consumption PUEsum of the PA can be obtained.

Table 3

| Output Power | Efficiency | Probability proportion at different output power in the operational network | Power Consumption at Different Output Power | Product of power consumption of PA in the terminal at different output power and corresponding probability proportion |
|---|---|---|---|---|

| dBm | mW | % | % | mW | mW |
|---|---|---|---|---|---|
| 5 | 3.16 | 1.00% | 20.000% | 316.23 | 63.25 |
| 6 | 3.98 | 2.00% | 15.000% | 199.05 | 29.86 |
| 7 | 5.01 | 2.00% | 2.000% | 250.59 | 5.01 |
| 8 | 6.31 | 3.00% | 2.000% | 210.32 | 4.21 |
| 9 | 7.94 | 4.00% | 1.000% | 198.58 | 1.99 |
| 11 | 10.00 | 5.00% | 1.000% | 200.00 | 2.00 |
| 11 | 12.59 | 6.00% | 1.000% | 209.82 | 2.10 |
| 12 | 15.85 | 7.00% | 1.000% | 226.41 | 2.26 |
| 13 | 19.95 | 9.00% | 1.000% | 221.70 | 2.22 |
| 14 | 25.12 | 3.00% | 2.000% | 837.30 | 16.75 |
| 15 | 31.62 | 5.00% | 3.000% | 632.46 | 18.97 |
| 16 | 39.81 | 7.00% | 2.000% | 568.72 | 11.37 |
| 17 | 50.12 | 13.00% | 1.000% | 385.53 | 3.86 |
| 18 | 63.10 | 20.00% | 1.000% | 315.48 | 3.15 |
| 19 | 79.43 | 4% | 2.000% | 1985.82 | 39.72 |
| 20 | 100.00 | 5.00% | 1.000% | 2000.00 | 20.00 |
| 21 | 125.89 | 6.00% | 2.000% | 2098.21 | 41.96 |
| 22 | 158.49 | 7.00% | 1.000% | 2264.13 | 22.64 |
| 23 | 199.53 | 10.00% | 4.000% | 1995.26 | 79.81 |
| 24 | 251.19 | 14.00% | 2.000% | 1794.20 | 35.88 |
| 25 | 316.23 | 18.00% | 15.000% | 1756.82 | 263.52 |
| 26 | 398.11 | 20.00% | 20.000% | 1990.54 | 398.11 |
|  |  |  |  | PUEsum | 1068.64 |

In this example, the following advantages are achieved:

(1) It evaluates the power consumption performance of the communication system part of different terminals when they are in the screen-off state and executing a specific continuous uplink service.

In other words, it provides an evaluation method for evaluating the power consumption performance of the communication system part of terminal products in the operational network (BaseBand IC (BBIC) + Radio Frequency IC (RFIC) + Radio Frequency Front-end Modules (RF FEM), etc.).

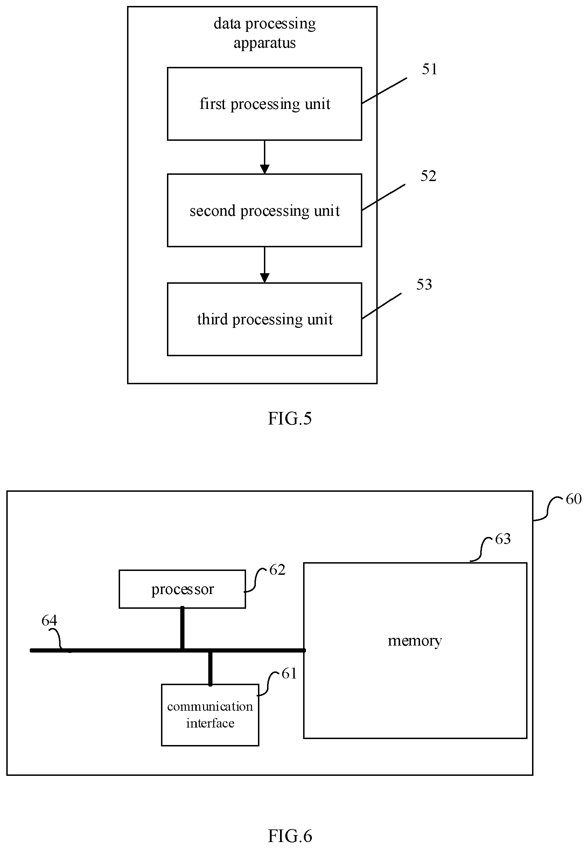

To implement the data processing method of the embodiments of the present disclosure, the embodiments of the present disclosure also provide a data processing apparatus. FIG. 5 is a schematic diagram of the structure of the data processing apparatus according to an embodiment of the present disclosure. As shown in FIG. 5, the apparatus includes:

a first processing unit 51, configured to determine the probability proportion of multiple terminals in the operational network at different output powers;

a second processing unit 52, configured to determine the power consumption of each terminal among the multiple terminals at the different output powers;

a third processing unit 53, configured to calculate the total power consumption of each terminal based on the probability proportion and the power consumption.

In one embodiment, the second processing unit 52 is further configured to:
for each terminal, determine the power consumption of the terminal at the different output powers based on the different output powers and the efficiency of the terminal in the operational network.

In one embodiment, the third processing unit 53 is further configured to:

for each terminal, multiply the power consumption of the terminal at different output powers by the corresponding probability proportion to obtain multiple first values;

sum the multiple first values to obtain a second value;

use the second value as the total power consumption of the terminal.

In one embodiment, the second processing unit 52 is further configured to:
for each terminal, determine the power consumption of the terminal at the different output powers when the terminal is in a screen-off state and executing a specific continuous uplink service.

In one embodiment, the third processing unit 53 is further configured to:

store the determined probability proportion and power consumption;

calculate the total power consumption of each terminal based on the probability proportion and power consumption stored locally.

In one embodiment, the apparatus is further configured to:

determine the probability proportion of power amplifiers in the multiple terminals in the operational network at different output powers; and determine the power consumption of the power amplifier in each terminal at the different output powers;

calculate the total power consumption of the power amplifier in each terminal based on the probability proportion and the power consumption.

In practical applications, the first processing unit 51, the second processing unit 52, and the third processing unit 53 can be implemented by a processor in the data processing apparatus.

It should be noted that the data processing apparatus provided by the above embodiments is only an example of the division of the above program modules when performing data processing. In practical applications, the above processing can be assigned to different program modules as needed, that is, the internal structure of the apparatus can be divided into different program modules to complete all or part of the above processing. In addition, the data processing apparatus provided by the above embodiments and the data processing method embodiments belong to the same concept, and the specific implementation process is detailed in the method embodiments, and will not be repeated here.

The embodiments of the present disclosure also provide a network device, as shown in FIG. 6, including:

a communication interface 61, capable of exchanging information with other devices;

a processor 62, connected to the communication interface 61, configured to execute the steps of the method provided by one or more technical solutions on the network device side when running a computer program. The computer program is stored in a memory 63.

It should be noted that the specific processing process of the processor 62 and the communication interface 61 is detailed in the method embodiments, and will not be repeated here.

Of course, in practical applications, the components of the network device 60 are coupled together through a bus system 64. It can be understood that the bus system 64 is used to implement connection communication between these components. The bus system 64 includes not only a data bus but also a power bus, a control bus, and a status signal bus. However, for clarity of description, all buses are labeled as the bus system 64 in FIG. 6.

The memory 63 in the embodiments of the present disclosure is used to store various types of data to support the operation of the network device 60. Examples of these data include: any computer program operating on the network device 60.

The methods disclosed in the embodiments of the present disclosure can be applied to the processor 62 or implemented by the processor 62. The processor 62 may be an integrated circuit chip with signal processing capabilities. In the implementation process, the steps of the above methods can be completed by hardware integrated logic circuits in the processor 62 or instructions in the form of software. The above processor 62 can be a general-purpose processor, a digital signal processor (DSP), or other programmable logic devices, discrete gates or transistor logic devices, discrete hardware components, etc. The processor 62 can implement or execute the methods, steps, and logic block diagrams disclosed in the embodiments of the present disclosure. A general-purpose processor can be a microprocessor or any conventional processor. The steps of the methods disclosed in the embodiments of the present disclosure can be directly embodied as being executed by a hardware decoding processor, or executed by a combination of hardware and software modules in the decoding processor. The software modules can be located in a storage medium, and the storage medium is located in the memory 63. The processor 62 reads the information in the memory 63 and completes the steps of the foregoing methods in combination with its hardware.

In an exemplary embodiment, the network device 60 can be implemented by one or more application-specific integrated circuits (ASICs), DSPs, programmable logic devices (PLDs), complex programmable logic devices (CPLDs), field-programmable gate arrays (FPGAs), general-purpose processors, controllers, microcontrollers (MCUs), microprocessors, or other electronic components, to execute the foregoing methods.

It can be understood that the memory (memory 63) in the embodiments of the present disclosure can be volatile memory or non-volatile memory, or can include both volatile and non-volatile memory. Among them, non-volatile memory can be read-only memory (ROM), programmable read-only memory (PROM), erasable programmable read-only memory (EPROM), electrically erasable programmable read-only memory (EEPROM), ferromagnetic random access memory (FRAM), flash memory, magnetic surface memory, optical disks, or CD-ROM; magnetic surface memory can be disk memory or tape memory. Volatile memory can be random access memory (RAM), which is used as an external cache. By way of example but not limitation, many forms of RAM are available, such as static random access memory (SRAM), synchronous static random access memory (SSRAM), dynamic random access memory (DRAM), synchronous dynamic random access memory (SDRAM), double data rate synchronous dynamic random access memory (DDRSDRAM), enhanced synchronous dynamic random access memory (ESDRAM), synchronous link dynamic random access memory (SLDRAM), and direct memory bus random access memory (DRRAM). The memory described in the embodiments of the present disclosure is intended to include but not limited to these and any other suitable types of memory.

In an exemplary embodiment, the embodiments of the present disclosure also provide a storage medium, that is, a computer storage medium, specifically a computer-readable storage medium, for example, a memory including a stored computer program. The computer program can be executed by the processor 62 of the network device 60 to complete the steps of the method on the network device side. The computer-readable storage medium can be FRAM, ROM, PROM, EPROM, EEPROM, Flash Memory, magnetic surface memory, optical disks, or CD-ROM.

It should be noted that "first", "second", etc. are used to distinguish similar objects and do not need to be used to describe a specific order or sequence.

In addition, the technical solutions recorded in the embodiments of the present disclosure can be combined arbitrarily without conflict.

The above are only the preferred embodiments of the present disclosure and are not intended to limit the scope of the present disclosure.

**Claims**

1. A data processing method, comprising:

   determining a probability proportion of multiple terminals in an operational network at different output power; and
   determining power consumption of each terminal among the multiple terminals at the different output power;
   calculating a total power consumption of each terminal based on the probability proportion and the power consumption.

2. The method according to claim 1, wherein determining the power consumption of each terminal among the multiple terminals at the different output power comprises:
   determining, for each terminal, the power consumption of the terminal at the different output power based on the different output power and efficiency of the terminal in the operational network.

3. The method according to claim 1 or 2, wherein calculating the total power consumption of each terminal based on the probability proportion and the power consumption comprises:

multiplying, for each terminal, the power consumption of the terminal at the different output power by the corresponding probability proportion to obtain multiple first values;
summing the multiple first values to obtain a second value; and
using the second value as the total power consumption of the terminal.

4. The method according to claim 1, wherein determining the power consumption of each terminal among the multiple terminals at the different output power comprises:
determining, for each terminal, the power consumption of the terminal at the different output power when the terminal is in a screen-off state and executing a specific continuous uplink service.

5. The method according to claim 1, wherein calculating the total power consumption of each terminal based on the probability proportion and the power consumption comprises:

storing the determined probability proportion and power consumption;
calculating the total power consumption of each terminal based on the probability proportion and power consumption stored locally.

6. The method according to claim 1, further comprising:

determining a probability proportion of power amplifiers in the multiple terminals in the operational network at different output power; and determining power consumption of the power amplifier in each terminal at the different output power;
calculating a total power consumption of the power amplifier in each terminal based on the probability proportion and the power consumption.

7. A data processing apparatus, comprising:

a first processing unit, configured to determine a probability proportion of multiple terminals in an operational network at different output power;
a second processing unit, configured to determine power consumption of each terminal among the multiple terminals at the different output power; and
a third processing unit, configured to calculate a total power consumption of each terminal based on the probability proportion and the power consumption.

8. A data processing apparatus, comprising:

a communication interface;
a processor, configured to: determine a probability proportion of multiple terminals in an operational network at different output power; determine power consumption of each terminal among the multiple terminals at the different output power; and calculate a total power consumption of each terminal based on the probability proportion and the power consumption.

9. A network device, comprising a processor and a memory for storing a computer program executable on the processor, wherein the processor is configured to run the computer program to perform the method according to any one of claims 1 to 6.

10. A computer-readable storage medium, having stored therein a computer program, wherein the computer program, when executed by a processor, implements the method according to any one of claims 1 to 6.

FIG.1

FIG.2

determining the probability proportion of power amplifiers in the multiple terminals in the operational network at different output powers 301

determining the power consumption of the power amplifier in each terminal at different output powers 302

calculating the total power consumption of the power amplifier in each terminal based on the probability proportion and the power consumption 303

FIG.3

determining the probability proportion of power amplifiers in the multiple terminals in the operational network at different output powers 401

when the terminal is in a screen-off state and executing a specific continuous uplink service, determining the power consumption of the power amplifier in the terminal at different output powers 402

calculating the total power consumption of the power amplifier in each terminal based on the probability proportion and the power consumption 403

FIG.4

data processing
apparatus

first processing unit — 51

↓

second processing unit — 52

↓

third processing unit — 53

FIG.5

— 60

— 63

processor — 62

64

memory

communication
interface — 61

FIG.6

## INTERNATIONAL SEARCH REPORT

| International application No. |
|---|
| **PCT/CN2023/117416** |

### A. CLASSIFICATION OF SUBJECT MATTER

H04W24 /08(2009.01)i

According to International Patent Classification (IPC) or to both national classification and IPC

### B. FIELDS SEARCHED

Minimum documentation searched (classification system followed by classification symbols)

IPC: H04W, H04L, H04B, G06F

Documentation searched other than minimum documentation to the extent that such documents are included in the fields searched

Electronic data base consulted during the international search (name of data base and, where practicable, search terms used)

CNTXT, ENTXT, DWPI, 3GPP, CNKI: 现网, 实测, 功耗, 能耗, 耗电, 功率, 权重, 加权, 比重, 占比, 统计, 计数, 计算, power consumption, energy consumption, power, weight, ratio, statistics, count, calculate

### C. DOCUMENTS CONSIDERED TO BE RELEVANT

| Category* | Citation of document, with indication, where appropriate, of the relevant passages | Relevant to claim No. |
|---|---|---|
| PX | US 11556685 B1 (ANSYS, INC.) 17 January 2023 (2023-01-17) description, column 6, line 32-column 7, line 36 | 1-10 |
| X | WO 2016172975 A1 (HUAWEI TECHNOLOGIES CO., LTD.) 03 November 2016 (2016-11-03) description, page 13, paragraph 5-page 17, paragraph 2, and page 29, paragraph 7-page 31, paragraph 1, and figures 1-12 | 1-10 |
| A | CN 112261683 A (CHINA MOBILE COMMUNICATION CO., LTD., RESEARCH INSTITUTE et al.) 22 January 2021 (2021-01-22) entire document | 1-10 |
| A | US 2020344689 A1 (NOKIA TECHNOLOGIES OY) 29 October 2020 (2020-10-29) entire document | 1-10 |
| A | WO 2018010409 A1 (ZTE CORP.) 18 January 2018 (2018-01-18) entire document | 1-10 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **01 November 2023** | **09 November 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/117416**

| Patent document cited in search report | | | Publication date (day/month/year) | Patent family member(s) | | | Publication date (day/month/year) |
|---|---|---|---|---|---|---|---|
| US | 11556685 | B1 | 17 January 2023 | None | | | |
| WO | 2016172975 | A1 | 03 November 2016 | US | 2018132196 | A1 | 10 May 2018 |
| | | | | JP | 2018518882 | A | 12 July 2018 |
| | | | | EP | 3282777 | A1 | 14 February 2018 |
| | | | | CN | 107113742 | A | 29 August 2017 |
| CN | 112261683 | A | 22 January 2021 | None | | | |
| US | 2020344689 | A1 | 29 October 2020 | WO | 2019141350 | A1 | 25 July 2019 |
| | | | | EP | 3741160 | A1 | 25 November 2020 |
| | | | | CN | 111771397 | A | 13 October 2020 |
| WO | 2018010409 | A1 | 18 January 2018 | CN | 107622004 | A | 23 January 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211105077